(19) Europäisches Patentamt
European Patent Office
Office européen des brevets

(11) **EP 4 722 862 A1**

(12) **EUROPEAN PATENT APPLICATION**
published in accordance with Art. 153(4) EPC

(43) Date of publication:
08.04.2026 Bulletin 2026/15

(21) Application number: 24815072.4

(22) Date of filing: 30.04.2024

(51) International Patent Classification (IPC):
G06F 3/01 (2006.01)          A63F 13/53 (2014.01)
A63F 13/79 (2014.01)         A63F 13/85 (2014.01)
A63F 13/215 (2014.01)        G06F 3/16 (2006.01)

(52) Cooperative Patent Classification (CPC):
A63F 13/215; A63F 13/53; A63F 13/79;
A63F 13/85; G06F 3/01; G06F 3/16

(86) International application number:
PCT/JP2024/016625

(87) International publication number:
WO 2024/247588 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.05.2023 JP 2023088910

(71) Applicant: Sony Group Corporation
Tokyo 108-0075 (JP)

(72) Inventors:
• TAKI, Yuhei
  Tokyo 108-0075 (JP)
• SAWAI, Kunihito
  Tokyo 108-0075 (JP)
• TAKASE, Masaki
  Tokyo 108-0075 (JP)
• MIYASHITA, Akira
  Tokyo 108-0075 (JP)

(74) Representative: MFG Patentanwälte
Meyer-Wildhagen Meggle-Freund
Gerhard PartG mbB
Amalienstraße 62
80799 München (DE)

(54) **PROPOSAL DEVICE, PROPOSAL METHOD, AND PROPOSAL PROGRAM**

(57) Provided is a proposal apparatus of an aspect according to the present disclosure including: a reception section configured to receive a request input by a user to an information processing system; and a proposal section configured to, when the request is received, calculate a degree of urgency of the user based on a use situation of the user in the information processing system and select and propose a solution to be presented to the user from among a plurality of solutions related to the request according to the calculated degree of urgency.

Fig.1

EP 4 722 862 A1

**Description**

Technical Field

The present disclosure relates to a proposal apparatus, a proposal method, and a proposal program capable of appropriately presenting a response in accordance with a user situation.

Background Art

With the development of information processing technology, there are increasing opportunities for users to utilize information devices provided with an information processing system. Via the development of such technology, when a user inputs a certain command or information to an information processing system, it is possible to use not only an input device such as a keyboard or a mouse but also various input methods such as voice input or gesture input. The system side is also capable of various expressions, such as interactions with the user via voice output or the like, as well as displaying information on the display.

A known technology relating to this includes switching the content of a response to a user by estimating the degree of urgency of the user based on the voice of the user.

Citation List

Patent Literature

PTL 1: 2020-86943 A

Summary

Technical Problem

With known technology, since the degree of urgency is estimated based on the voice of the user, the user can have an interaction with the system in accordance with the situation without inputting information indicating that the user is in an urgent state or the like to the system.

However, a user may find themselves in various situations, and it may not be necessarily appropriate to estimate the degree of urgency based on only voice information. For example, as users of the system become more diverse and the system becomes more complex, the system may have an input method not based on voice or an input method that can be used may differ depending on the application in the system.

That is, in the information processing system, it is desirable to be able to flexibly and dynamically respond according to the situation of the user. Further, it is desirable that the response provided by the system is provided in the content or format desired by the user according to the situation of the user.

Thus, the present disclosure provides a proposal apparatus, a proposal method, and a proposal program that are capable of appropriately presenting a response in accordance with a user situation.

Solution to Problem

To solve the problems described above, a proposal apparatus of an aspect according to the present disclosure includes: a reception section configured to receive a request input by a user to an information processing system; and a proposal section configured to, when the request is received, calculate a degree of urgency of the user based on a use situation of the user in the information processing system and select and propose a solution to be presented to the user from among a plurality of solutions related to the request according to the calculated degree of urgency.

Brief Description of Drawings

[Fig. 1] Fig. 1 is a diagram illustrating an overview of proposal processing according to an embodiment.
[Fig. 2] Fig. 2 is a diagram for describing proposal processing according to an embodiment.
[Fig. 3] Fig. 3 is a diagram illustrating a configuration example of a proposal apparatus according to an embodiment.
[Fig. 4] Fig. 4 is a diagram illustrating an example of a user information storage section according to an embodiment.
[Fig. 5] Fig. 5 is a flowchart (1) illustrating an example of the procedure of proposal processing according to an embodiment.

[Fig. 6] Fig. 6 is a flowchart (2) illustrating an example of the procedure of proposal processing according to an embodiment.

[Fig. 7] Fig. 7 is a diagram illustrating a variation of calculation processing according to an embodiment.

[Fig. 8] Fig. 8 is a diagram (1) illustrating a variation of display control processing according to an embodiment.

[Fig. 9] Fig. 9 is a diagram (2) illustrating a variation of display control processing according to an embodiment.

[Fig. 10] Fig. 10 is a diagram (3) illustrating a variation of display control processing according to an embodiment.

[Fig. 11] Fig. 11 is a diagram (4) illustrating a variation of display control processing according to an embodiment.

[Fig. 12] Fig. 12 is a hardware configuration diagram illustrating an example of a computer that realizes the functions of a proposal apparatus.

Description of Embodiments

Hereinafter, embodiments will be described in detail with reference to the drawings. In the following embodiments, the same components are denoted by the same reference numerals, and redundant description thereof will be omitted.

The present disclosure will be described in the following item order.

1. Embodiment

    1-1. Overview of Proposal Processing according to Embodiment
    1-2. Configuration of Proposal Apparatus according to Embodiment
    1-3. Procedure of Proposal Processing according to Embodiment
    1-4. Variation of Proposal Processing
    1-5. Modification Examples

        1-5-1. Apparatus Configuration
        1-5-2. Input to System
        1-5-3. Aspects of System
        1-5-4. Aspect of Solution (Help Content) Proposal

2. Other Embodiments
3. Effects of Proposal Apparatus according to Present Disclosure
4. Hardware Configuration

1. Embodiment

1-1. Overview of Proposal Processing according to Embodiment

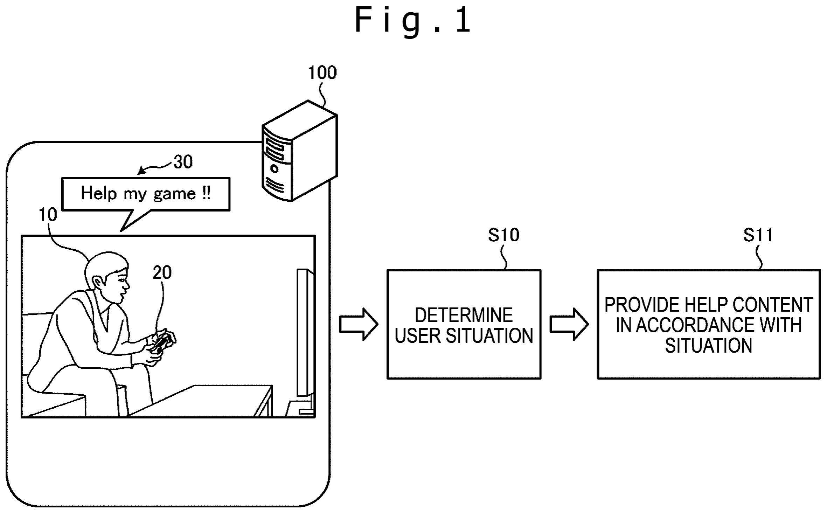

FIG. 1 is a diagram illustrating an overview of proposal processing according to an embodiment. The proposal processing according to the embodiment is implemented by a proposal apparatus 100 illustrated in FIG. 1.

The proposal apparatus 100 is an example of an information processing apparatus that executes proposal processing according to the embodiment. For example, the proposal apparatus 100 is a video game console such as a game machine, a cloud server or a personal computer (PC) connected to a network, a smartphone, a tablet terminal, or the like. The proposal apparatus 100 may be a smart home appliance such as a television, a wearable device such as a smartwatch, or the like as long as the device has functions to be described later. In the example illustrated in FIG. 1, the proposal apparatus 100 is an information processing apparatus including a voice agent that can perform voice interactions with a user 10 and can display various types of information on a display connected thereto.

The user 10 is a user who uses an information processing system (hereinafter, simply referred to as a "system") provided by the proposal apparatus 100. The system provided by the proposal apparatus 100 functions as a so-called operating system (OS) that operates an installed game application, a video viewing application, or the like and controls message transmission and chat functions with other users, for example. The user 10 can input various instructions (referred to as "commands" or the like) to the system by using a controller 20, which is an example of an input device. For example, the user 10 can operate the controller 20 to search for a friend (friend user) connected to the network or search for a video that the user 10 wants to view. In the following description, a user who is the subject in terms of inputting a command to the proposal apparatus 100 is referred to as the "user 10" and is distinguished from other users (friends) connected to the user 10 via the network.

In recent years, with the development of technologies such as voice interaction and image recognition, the user 10 can issue a command to the system by a voice command or a gesture command without using a physical input device such as the controller 20. For example, the user 10 can activate an application or attempt to communicate with another user by uttering a command such as "search for a video", "open a game application", or "send a message to another user" using the voice recognition function of the proposal apparatus 100.

For example, the user 10 can input various requests to the proposal apparatus 100 via voice even while playing game content (hereinafter, simply referred to as a "game"). As an example, the user 10 can input a request for a certain kind of solution when the user 10 loses understanding of the controls during gameplay, the user 10 is stuck in the game, or the user 10 feels that the game strategy is difficult. Such a solution is called help information, for example, and is realized by a help file or the like officially provided by a game provider. For example, the user 10 can activate and display help information by uttering a preset command (a word such as "help").

However, the solutions in the game or the like are not limited to the official help information, and there are various conceivable ways (hereinafter, such ways and solutions may be collectively referred to as "help content") such as a guide video or a website provided as web content or asking for help from a friend. The user 10 can refer to the official help information when there is a lull in play but may want to know a solution as soon as possible or a way for quickly improving the current play situation during play of a game that requires immediacy.

In such a situation, the user 10 needs to think about solutions by themselves and input a corresponding request into the system. Thus, in a situation where immediacy is required (for example, during gameplay), the user 10 may find themselves in a situation where the user 10 cannot utilize the request for help content or cannot receive a proposal of a desired solution.

That is, when a request for help content is issued to the system, it is desirable that the content to be proposed is highly useful to the user 10 and is executed by a method that does not interfere with the play of a game or the like.

Regarding this, the proposal apparatus 100 according to the present disclosure solves the above-described problem by the following processing. That is, the proposal apparatus 100 receives a request input by the user 10 to the system and calculates the degree of urgency of the user 10 based on the use situation of the user 10 in the system when the request is received. Then, the proposal apparatus 100 selects and proposes a solution to be presented to the user 10 from among a plurality of solutions related to the request in accordance with the calculated degree of urgency.

For example, when the degree of urgency is lower than a predetermined value, that is, when the user 10 playing the game is in a lull, the proposal apparatus 100 proposes viewing of official help content in response to a request for help content from the user 10. On the other hand, when the degree of urgency is higher than the predetermined value, that is, when the user 10 wants to overcome the current situation as soon as possible, the proposal apparatus 100 proposes a solution with high immediacy, such as inviting a friend of the user 10 to the gameplay to play the game together to solve the problem.

In this manner, the proposal apparatus 100 dynamically changes and proposes a solution to be presented to the user 10 from among a plurality of solutions in accordance with the situation when the user 10 performs a voice input. Accordingly, the proposal apparatus 100 can propose a solution that is in line with the situation on the spot and meets the expectation of the user 10, regardless of the request by the user 10 being the same content of "I want help content".

Hereinafter, an overview of the proposal processing according to the embodiment will be described using the example illustrated in FIG. 1. The example of FIG. 1 illustrates a situation in which the user 10 is playing a game being executed by the proposal apparatus 100 using the controller 20.

When the user 10 wants to obtain some help while playing the game, the user 10 performs voice input to the proposal apparatus 100 to search for a solution. For example, the user 10 utters a preset voice command 30 of "Help my game".

When the input of the voice command 30 is received, the proposal apparatus 100 determines the situation of the user 10 playing the game (step S10).

As an example, the proposal apparatus 100 calculates, as the situation of the user 10, the degree of urgency that is a value indicating how quickly the user 10 desires it to be dealt with. Specifically, the proposal apparatus 100 calculates the degree of urgency of the user 10 based on the voice information of the voice command 30 uttered by the user 10.

Thereafter, the proposal apparatus 100 determines the situation of the user 10 based on the calculated degree of urgency. Then, the proposal apparatus 100 provides the user 10 with help content corresponding to the situation (step S11).

For example, when the user 10 wants to deal with the gameplay as soon as possible, the proposal apparatus 100 proposes, to the user 10, a solution of inviting an online friend of the user 10 to the game as an immediate solution. On the other hand, when the proposal apparatus 100 determines that the urgency is low and the user 10 has time to take time to search for a solution, the proposal apparatus 100 proposes static and comprehensive help content such as official help content to the user 10.

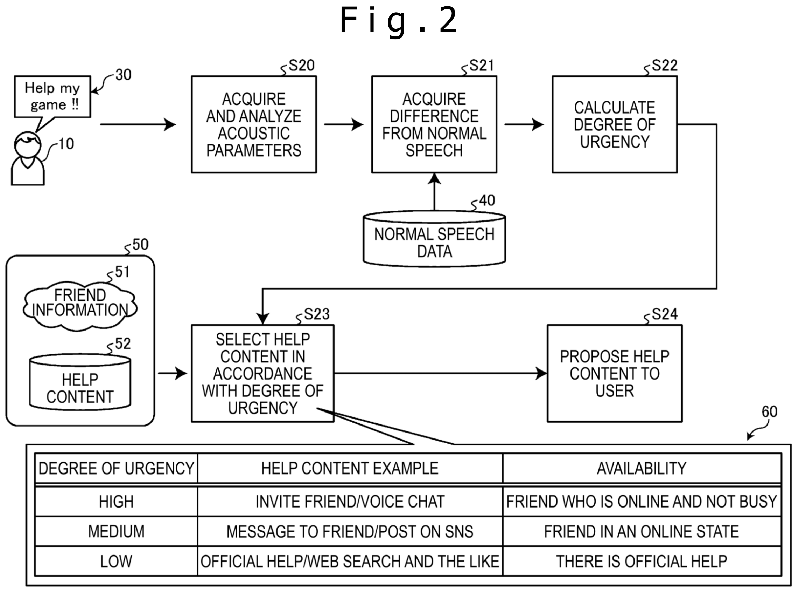

The processing illustrated in FIG. 1 will be described in more detail with reference to FIG. 2. FIG. 2 is a diagram for describing proposal processing according to the embodiment.

In FIG. 2, the user 10 inputs the voice command 30 to the proposal apparatus 100 by uttering the voice command 30, as in FIG. 1.

The proposal apparatus 100 analyzes the acoustic parameter of the voice included in the voice command 30 and acquires analyzed information (step S20). Specifically, the proposal apparatus 100 acquires the speech speed, the volume, the pitch, and the like of the voice uttered by the user 10.

The proposal apparatus 100 acquires, from a database 40, the acoustic parameters of the speech of the user 10 in the normal state from the speech data of when the user 10 registered the voice command 30 in advance, the normal speech data of the user 10, and the like.

The proposal apparatus 100 compares the input voice command 30 with the normal acoustic parameters of the user 10 and acquires difference therebetween (step S21). Subsequently, the proposal apparatus 100 calculates the degree of urgency of the user 10 based on the acquired differences (step S22).

For example, the proposal apparatus 100 calculates the degree of urgency by using the following Expression (1).

$$S\_emrg = a * speed\_diff + b * vol\_diff + c * pitch\_diff \ ...(1)$$

In the above Expression (1), "S_emrg" indicates the degree of urgency of the user 10. Further, "speed_diff" indicates a difference in speech speed between when the voice command 30 is input and normal speech. "vol_diff" indicates a difference in volume between when the voice command 30 is input and normal speech. "pitch_diff" indicates a difference in pitch between when the voice command 30 is input and normal speech. "a", "b", and "c" represent coefficients for weighting. The above Expression (1) is an example of the calculation of the degree of urgency, and the proposal apparatus 100 may use acoustic parameters other than the described acoustic parameters in the calculation processing. In addition, a known technique may be used as appropriate as a method of calculating the difference between the acoustic parameters.

Then, the proposal apparatus 100 selects help content corresponding to the situation of the user 10 based on the calculated degree of urgency (step S23).

At this time, the proposal apparatus 100 acquires the related information 50 associated with the user 10 or the game. The related information 50 includes friend information 51 indicating online friends of the user 10, help content 52 associated with the game, and the like.

The proposal apparatus 100 refers to the related information 50 and selects an optimal solution (help content) that can be proposed to the user 10. A data table 60 indicates candidates for help content for the proposal apparatus 100 to present to the user 10.

As an example of help content illustrated in the data table 60, for cases where the degree of urgency is greater than a predetermined value, solutions such as "invite friend to game" and "start voice chat with friend" are registered. That is, when the user 10 desires a quick solution in the game, the proposal apparatus 100 proposes, to the user 10, a solution of inviting friends of the user 10 who are in an online state to the game and solving the problem together. Alternatively, the proposal apparatus 100 proposes, to the user 10, a solution such as starting a voice chat with the user 10 who is in an online state and asking a friend for a solution. When proposing such a solution, the proposal apparatus 100 confirms that the friend is in an online state and the friend is in a state of being able to participate in the game (not in a busy state). If the friend is in a busy state, the proposal apparatus 100 selects another solution as the solution to be proposed to the user 10.

As another example of the help content illustrated in the data table 60, for cases where the degree of urgency is medium, solutions such as "send a text message to a friend" and "post a message on a social networking service (SNS) used by the user 10" are registered. That is, when the degree of urgency of the user 10 is medium, the proposal apparatus 100 proposes, to the user 10, a solution of sending a message to a friend of the user 10 who is in an online state and asking the friend to reply with a solution. Alternatively, the proposal apparatus 100 proposes, to the user 10, a solution such as posting a message on the SNS and waiting for a solution to appear on the SNS. For example, the proposal apparatus 100 may propose a solution such as "send a text message to a friend" to the user 10 when there is a friend in an online state and propose a solution such as "post a message on an SNS" to the user 10 when there is no friend in an online state.

As another example of the help content illustrated in the data table 60, for cases where the degree of urgency is low, solutions such as "display official help content provided by the distributer of the game" and "search for game strategy information or the like on the web" are registered. That is, when the degree of urgency of the user 10 is lower than a predetermined value and urgency is not needed, the proposal apparatus 100 proposes, to the user 10, a solution of displaying the official help content for the user 10 themself to check for a solution from the help content. Alternatively, the proposal apparatus 100 may propose, to the user 10, a solution such as searching for information of a website or the like related to the game. For example, the proposal apparatus 100 may propose a solution such as "display official help content" to the user 10 when official help content is registered, and propose a solution such as "search for game strategy information or the like on the web" to the user 10 when official help content is not registered.

As described above, the proposal apparatus 100 selects a solution to be presented to the user 10 from among a plurality of solutions registered as help content in accordance with the degree of urgency. Then, the proposal apparatus 100 proposes the selected one or more solutions to the user 10 (step S24).

As described above, when the request for providing the solution is received from the user 10, the proposal apparatus 100 does not simply provide the user 10 with the information related to the game, but proposes help content that is in line with the situation of the user 10 from among the plurality of solutions. Accordingly, the proposal apparatus 100 can accurately provide the information desired by the user 10.

1-2. Configuration of Proposal Apparatus according to Embodiment

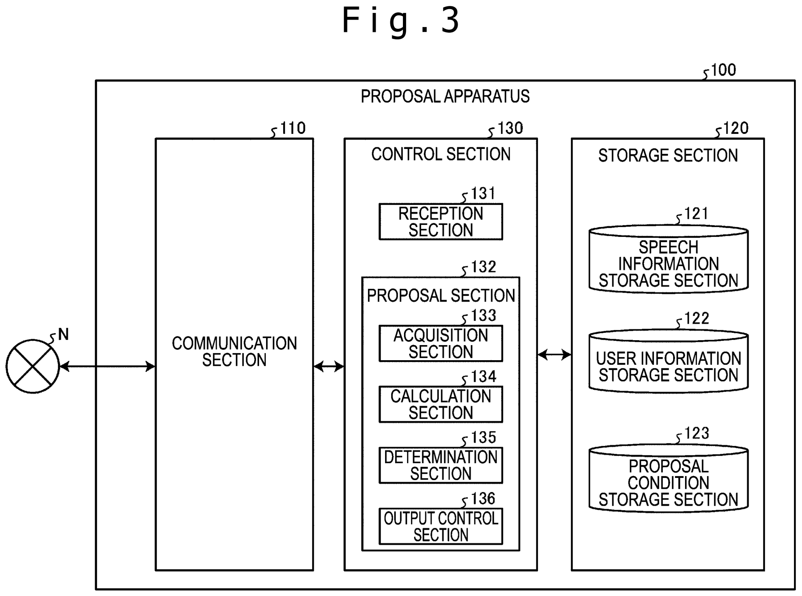

Next, the configuration of the proposal apparatus 100 will be described. FIG. 3 is a diagram illustrating a configuration example of the proposal apparatus 100 according to the embodiment.

As illustrated in FIG. 3, the proposal apparatus 100 includes a communication section 110, a storage section 120, and a control section 130. The proposal apparatus 100 may include an input section (for example, a microphone, a keyboard, a touch display, or the like) that receives various operations from an administrator who manages the proposal apparatus 100, the user 10, or the like and a display section (for example, a liquid crystal display or the like) for displaying various types of information.

The communication section 110 is implemented by, for example, a network interface card (NIC), a network interface controller, or the like. The communication section 110 is connected to the network N in a wired or wireless manner and transmits and receives information to and from the controller 20, an external device, and the like via the network N. The network N is implemented by a wireless communication standard or method such as Bluetooth (registered trademark), the Internet, Wi-Fi (registered trademark), ultra wide band (UWB), or low power wide area (LPWA).

The storage section 120 is implemented by, for example, a semiconductor memory element such as a random access memory (RAM) or a flash memory or a storage apparatus such as a hard disk or an optical disk.

The storage section 120 stores various types of information for executing the proposal processing according to the embodiment. The storage section 120 stores programs such as applications that function in the system and various types of data used for processing. In the embodiment, a speech information storage section 121, a user information storage section 122, and a proposal information storage section 123 are illustrated as the storage section 120.

The speech information storage section 121 stores speech information of speech of a user who uses the system. For example, the speech information storage section 121 stores speech information of the user 10 when the user who uses the system is registered. The speech information includes, for example, acoustic parameters of the normal speech of the user 10. For example, when calculating the degree of urgency of the user 10, the proposal apparatus 100 refers to information relating to the normal speech of the user 10 stored in the speech information storage section 121.

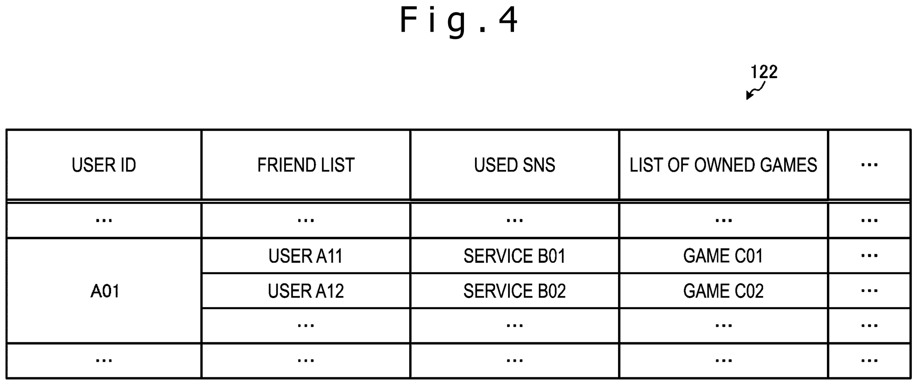

The user information storage section 122 stores information of a user who uses the system. FIG. 4 illustrates an example of information held by the user information storage section 122. FIG. 4 is a diagram illustrating an example of the user information storage section 122 according to the embodiment. As illustrated in FIG. 4, the user information storage section 122 includes items such as "User ID", "Friend list", "SNS used", and "List of owned games".

"User ID" indicates identification information for identifying a user who uses the system or a specific game. "Friend list" indicates other users registered as friends of the user 10. "SNS used" is the SNS used by the user 10 and indicates the name and link destination of the SNS linked to the system. "List of owned games" indicates information related to the games owned by the user 10 that operate on the system.

The proposal information storage section 123 stores information related to proposal information proposed by the proposal apparatus 100 when the user 10 requests help content. For example, the proposal information storage section 123 stores the content of help content to be proposed to the user 10, conditions for selecting help content, and the like. The proposal information storage section 123 corresponds to, for example, the data table 60 illustrated in FIG. 2.

Referring back to FIG. 3, the description will be continued. The control section 130 is implemented by, for example, a central processing unit (CPU), a micro processing unit (MPU), a GPU, or the like executing a program (for example, a proposal program according to the present disclosure) stored in the proposal apparatus 100 using a RAM or the like as a work area. The control section 130 is a controller and may be implemented by an integrated circuit such as an application specific integrated circuit (ASIC) or a field programmable gate array (FPGA).

As illustrated in FIG. 3, the control section 130 includes a reception section 131 and a proposal section 132. The proposal section 132 includes an acquisition section 133, a calculation section 134, a determination section 135, and an output control section 136.

The reception section 131 receives a request input by the user 10 to the system. Specifically, the reception section 131 recognizes the voice information of the speech uttered by the user 10 and receives a request for help content from the user 10 to the system. More specifically, the reception section 131 receives a request for help content for a game running on the system.

When a request from the user 10 is received, the proposal section 132 determines the degree of urgency of the user 10 based on the use situation of the user 10 in the system and selects and proposes a solution to be presented to the user 10 from among a plurality of solutions related to the request in accordance with the determined degree of urgency.

The proposal section 132 includes the acquisition section 133, the calculation section 134, the determination section 135, and the output control section 136 and executes the proposal processing according to the embodiment by controlling each processing section. The acquisition section 133 acquires, for example, the use situation of the user 10 in the system. The calculation section 134 calculates the degree of urgency of the user 10 based on the use situation. The determination section 135 determines a solution (which help content is to be presented or the like) to be presented to the user 10 based on the calculated degree of urgency. The output control section 136 performs control to output the solution to be presented to the user 10. For example, the output control section 136 performs control so that help content is displayed on a screen or audio related to the help content is output in the system.

For example, the proposal section 132 calculates the degree of urgency based on a comparison between the voice when the user 10 inputs the request and the normal voice of the user 10. In addition, the proposal section 132 proposes, to the user 10, contact with a friend of the user 10 in the game, posting of content related to the request to a network (SNS or the like), display of official help content associated with the game, or the like among the solutions according to the degree of urgency.

The proposal section 132 may execute proposal processing according to the situation of the friend of the user 10. For example, when a friend of the user 10 is online, that is, when the friend is likely to be able to immediately participate in the game of the user 10, the proposal section 132 may propose to the user 10 to invite the friend to the game. Alternatively, when a friend of the user 10 is offline or busy (for example, when the friend is playing another game), the proposal section 132 may propose to the user 10 to send a message to the friend.

In addition, in a case where the user 10 has already viewed the official help content associated with the game within a certain period of time at the time of proposing the solution, the proposal section 132 may propose a solution other than the official help content to the user 10. Accordingly, the proposal section 132 can avoid proposing a duplicate solution to the user 10 and can propose more useful information.

1-3. Procedure of Proposal Processing according to Embodiment

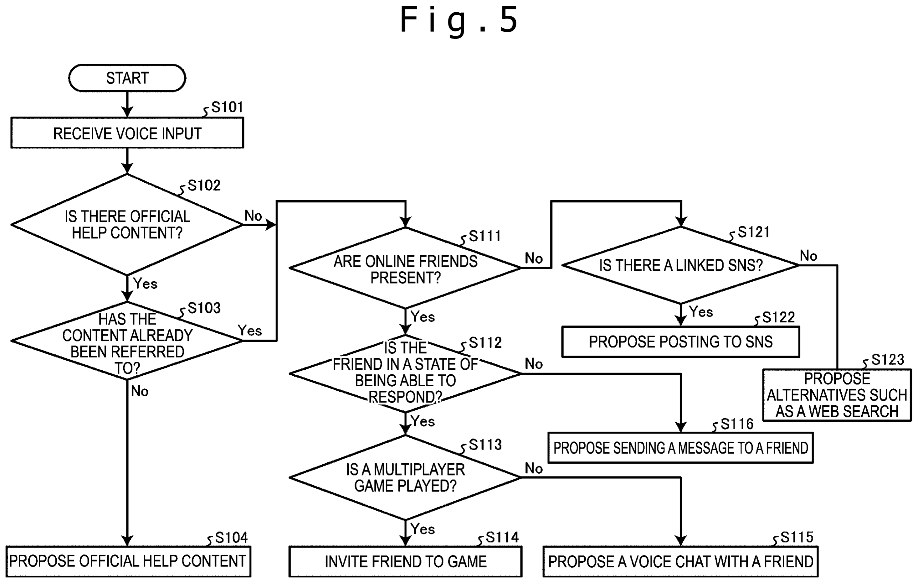

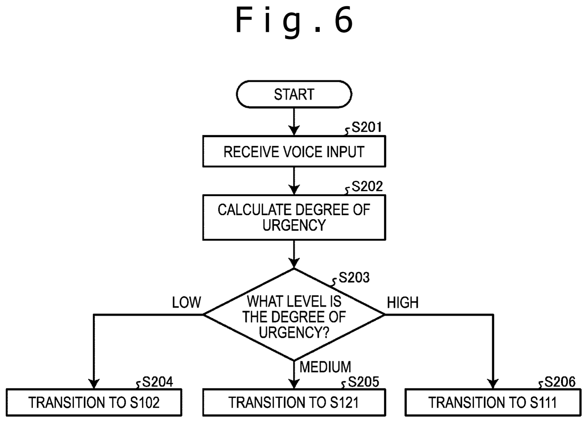

The flow of the proposal processing according to the embodiment will be described with reference to FIGS. 5 and 6. FIG. 5 is a flowchart (1) illustrating an example of the procedure of proposal processing according to the embodiment.

First, the proposal apparatus 100 receives a voice input such as "Help" uttered by the user 10 (step S101). The proposal apparatus 100 may calculate the degree of urgency based on the received voice input, and this processing will be described later with reference to FIG. 6.

The proposal apparatus 100 determines whether or not there is official help content associated with the game for the game being played by the user 10 (step S102). If official help content is present (step S102; Yes), the proposal apparatus 100 determines whether or not the user 10 has already referred to the official help content (step S103). If the user 10 has not referred to the official help content in the past (step S103; No) or when a considerable period has elapsed from when the user 10 previously referred to the official help content, the proposal apparatus 100 proposes to the user 10 to refer to the official help content (step S104).

On the other hand, if the user 10 has already referred to the official help content (step S103; Yes) or when official help content does not exist (step S102; No), the proposal apparatus 100 searches for another solution. For example, the proposal apparatus 100 determines whether or not there is an online friend of the user 10 (step S111).

If there is an online friend of the user 10 (step S111; Yes), the proposal apparatus 100 determines whether the online friend is in a state of being able to respond (step S112).

If the online friend is in a state of being able to respond (step S112; Yes), the proposal apparatus 100 further determines whether or not the game being played by the user 10 is a game (multiplayer game) in which the friend is able to participate (step S113).

If the game being played by the user 10 is a multiplayer game (step S113; Yes), the proposal apparatus 100 determines that the friend can be invited into the game and proposes to the user 10 to invite the friend into the game (step S114). On the other hand, if the game being played by the user 10 is not a multiplayer game (step S113; No), the friend cannot directly participate in the game, and thus the proposal apparatus 100 proposes to the user 10 to talk with the friend (voice chat) and ask for a solution (step S115).

When the friend is not in a state of being able to respond in step S112 (step S112; No), the proposal apparatus 100 determines that it is difficult to directly contact the friend and proposes to the user 10 to send a message to the friend (step S116).

In addition, in step S111, if a contactable friend of the user 10 is not present on the network or the like (step S111; No), the proposal apparatus 100 determines whether or not an SNS to which the user 10 is linked (registered in an available state) exists (step S121).

If there is a linked SNS (step S121; Yes), the proposal apparatus 100 proposes to the user 10 to post a message or the like on the SNS (step S122).

On the other hand, if there is no linked SNS (step S121; No), the proposal apparatus 100 proposes an alternative proposal such as searching for a website with information related to the game to the user 10 (step S123).

Next, a procedure of proposal processing when the proposal apparatus 100 calculates the degree of urgency based on the input voice will be described with reference to FIG. 6. FIG. 6 is a flowchart (2) illustrating an example of the procedure of proposal processing according to the embodiment.

The proposal apparatus 100 receives a voice input from the user 10 (step S201), similarly to step S101 illustrated in FIG. 5. At this time, the proposal apparatus 100 calculates the degree of urgency of the user 10 based on the voice (step S202).

The proposal apparatus 100 determines the level of the calculated degree of urgency based on a predetermined reference value (step S203). In the example illustrated in FIG. 6, the proposal apparatus 100 determines the degree of urgency in three stages, namely, "high", "medium", and "low".

When the degree of urgency is low, it is assumed that the user 10 expects reliable and broader information over a quick solution, and thus the proposal apparatus 100 causes the processing to transition to step S102 illustrated in FIG. 5 in order to propose a solution such as referring to the official help content (step S204).

When the degree of urgency is medium, the proposal apparatus 100 causes the processing to transition to step S121 illustrated in FIG. 5 in order to propose a solution such as posting on SNS or searching a website (step S205).

When the degree of urgency is low, it is assumed that the user 10 expects a quick solution, and thus the proposal apparatus 100 causes the processing to transition to step S111 illustrated in FIG. 5 in order to propose a solution such as directly contacting a friend (step S206).

In this manner, the proposal apparatus 100 can employ a procedure in which some items of processing in the processing flow illustrated in FIG. 5 are skipped according to the degree of urgency. Accordingly, the proposal apparatus 100 can appropriately propose a solution according to the situation of the user 10.

1-4. Variation of Proposal Processing

In the example described above, the proposal apparatus 100 calculates the degree of urgency in accordance with the voice parameters of the user 10. However, the proposal apparatus 100 may calculate the degree of urgency based on various pieces of information for estimating the use situation of the user 10.

For example, the proposal apparatus 100 may calculate the degree of urgency based on operation information in a game that is being played when the user 10 inputs a request. In addition, the proposal apparatus 100 may determine, in the game being played by the user 10, the degree of urgency based on setting information set in advance for each scene in the game.

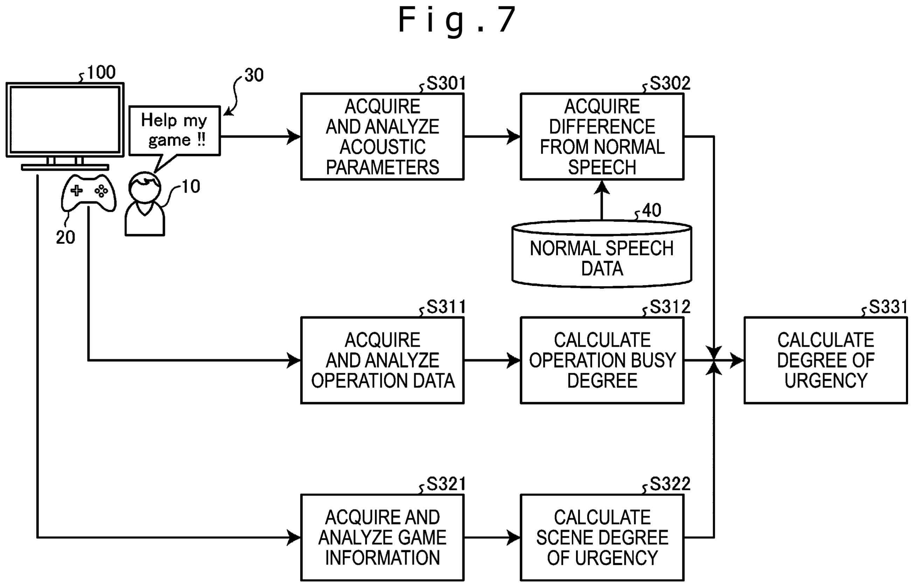

This point will be described with reference to FIG. 7. FIG. 7 is a diagram illustrating a variation of the calculation processing according to the embodiment.

In the example of FIG. 7, the user 10 utters the preset voice command 30 of "Help my game".

As also illustrated in FIG. 2, the proposal apparatus 100 analyzes the acoustic parameter of the voice included in the voice command 30 and acquires analyzed information (step S301). The proposal apparatus 100 acquires, from the database 40, the acoustic parameters of the speech of the user 10 in the normal state from the speech data of when the user 10 registered the voice command 30 in advance, the normal speech data of the user 10, and the like. The proposal apparatus 100 compares the input voice command 30 with the normal acoustic parameters of the user 10 and acquires difference therebetween (step S302).

In parallel with the processing described above, the proposal apparatus 100 may acquire and analyze operation data of the gameplay by the user 10 from the controller 20 or the like (step S311). Then, the proposal apparatus 100 calculates an operation busy degree indicating how much urgency the user 10 is in, based on the operation data (step S312). The proposal apparatus 100 determines the degree of urgency of the user 10 based on the operation busy degree.

For example, the proposal apparatus 100 calculates the operation busy degree by using the following Expression (2).

$$S\_busy = d * key\_num\_min + e * hold\_strength + f * sweat\_val \ ... \ (2) \tag{2}$$

In the above Expression (2), "S_busy" indicates the operation busy degree of the user 10. Further, "key_num_min" indicates the frequency of key operations by the user 10 in a predetermined amount of time. "hold_strength" indicates the degree of force with which the user 10 holds the controller 20. "sweat_val" indicates the amount of perspiration in a state where the user 10 is holding the controller 20. "d", "e", and "f" represent coefficients for weighting. The above Expression (2) is an example of the calculation of the degree of urgency, and the proposal apparatus 100 may use operation data other than the described operation data in the calculation processing. In addition, a known technique may be used as appropriate as a method of calculating each piece of operation data.

Further, in parallel with the processing described above, the proposal apparatus 100 may acquire and analyze game information from the game being played by the user 10 (step S321). Then, the proposal apparatus 100 calculates, based on the game information, a scene degree of urgency indicating how much urgency is in the game progress the user 10 is facing (step S322). The proposal apparatus 100 determines the degree of urgency of the user 10 based on the scene degree of urgency.

For example, the proposal apparatus 100 calculates the scene degree of urgency by using the following Expression (3).

$$S\_emrg\_scn = n * (degree\ of\ urgency\ preset\ for\ each\ title/scene)\ ...\ (3) \tag{3}$$

In the above Expression (3), "S_emrg_scn" indicates the scene degree of urgency based on the game information. "degree of urgency preset for each title/scene" is, for example, a value of the degree of urgency set in advance as game information and is set for each game title and each scene of the game. For example, if the game title is a genre such as an action game from a first person perspective, the degree of urgency is set to be high because reactions with high immediacy are required of the user 10 compared to games of other genres. In addition, in a scene in a game, if the scene is a scene in which a high degree of difficulty is required for the operation by the user 10, the degree of urgency is set to be higher than that in other scenes.

The degree of urgency for each scene may be set as appropriate by the proposal apparatus 100. For example, the proposal apparatus 100 may set the degree of urgency of a scene in real time based on the levels of the light amount or the sound volume that is controlled to be displayed in the scene being played, the intensity of the action of the game character, or the like.

The proposal apparatus 100 calculates the degree of urgency of the user 10 based on the values calculated in the step S302, the step S312, and the step S322 (step S331). In this manner, the proposal apparatus 100 calculates the degree of urgency based on various elements indicating the situation of the user while not limited to the acoustic parameters and thus can appropriately determine the response speed and the granularity at which the user 10 requests the help content.

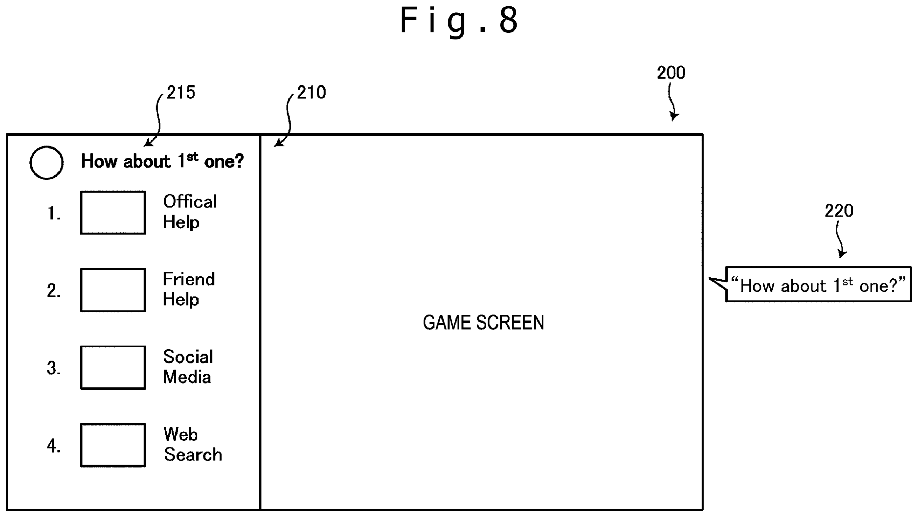

The proposal apparatus 100 may execute processing according to the situation of the user 10 even when outputting the help content. That is, the proposal apparatus 100 may adjust the number of items of help content to be displayed on the play screen of the game in a superimposed manner from among the plurality of items of help content to be presented to the user 10 or the display area in which the proposed help content is displayed, according to the degree of urgency. This point will be described with reference to FIGS. 8 to 11. FIG. 8 is a diagram (1) illustrating a variation of the display control processing according to the embodiment.

FIG. 8 illustrates a display area 200 displaying a game being played by the user 10. For example, the display area 200 corresponds to a screen included in a display or a window for displaying a game.

When the voice command 30 is received from the user 10, the proposal apparatus 100 proposes help content to the user 10 by calculating the degree of urgency and then displaying the help content corresponding to the degree of urgency on the screen. In the example illustrated in FIG. 8, the proposal apparatus 100 displays a display area 210 for proposing help content superimposed on the left portion of the game screen.

In the example illustrated in FIG. 8, the proposal apparatus 100 presents a plurality of items of help content having a low degree of urgency to the user 10 and displays the display area 210 in a display mode that allows the user 10 to select any item of the help content. For example, the proposal apparatus 100 proposes, to the user 10, to view the official help content that is the help content at the top, after presenting four items of help content to the user 10. At this time, the proposal apparatus 100 may output a message 215 proposing the user 10 to view the official help content or a voice guidance 220 together with the display area 210.

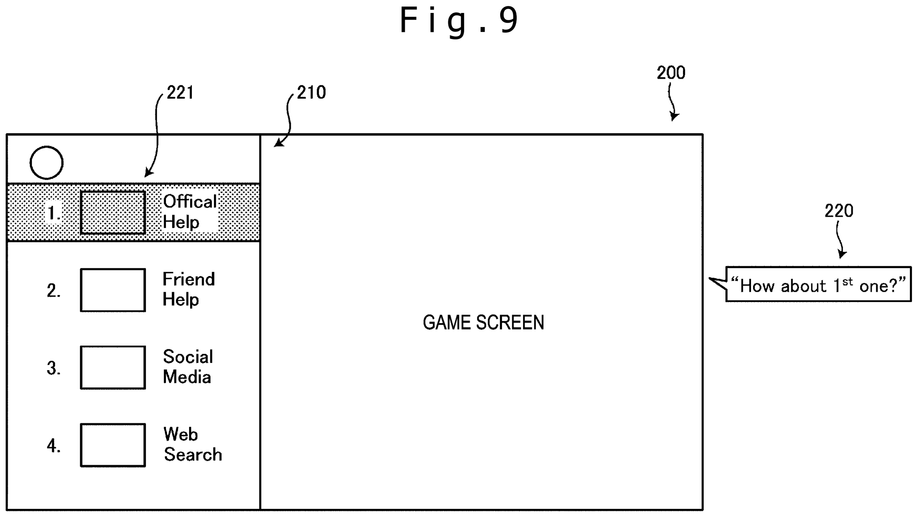

The proposal apparatus 100 may prompt the user 10 to select the help content by highlighting the help content. This point will be described with reference to FIG. 9. FIG. 9 is a diagram (2) illustrating a variation of the display control processing according to the embodiment. In the example illustrated in FIG. 9, the proposal apparatus 100 provides a highlight display 221 such as highlighting, instead of the message 215, for the official help content that is the help content at the top. This allows the user 10 to grasp the proposed help content at a glance.

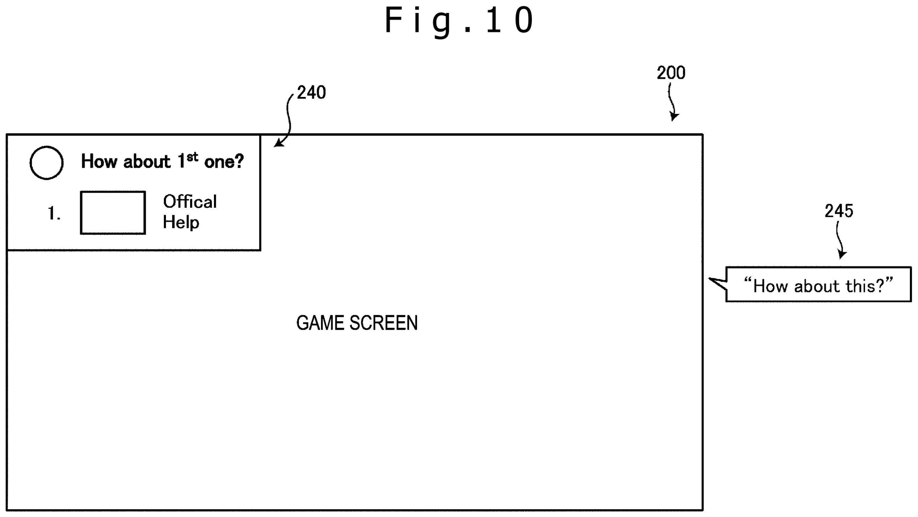

In addition, when the user 10 is in a busier part of gameplay and it is estimated that it would be troublesome to select one of the items of help content, the proposal apparatus 100 may reduce the number of help contents to be proposed. That is, if the degree of urgency is greater than a predetermined value, the proposal apparatus 100 may reduce the number of items of help content to be displayed superimposed on the play screen of the game from among the plurality of items of help content. Alternatively, if the degree of urgency is greater than a predetermined value, the proposal apparatus 100 may reduce the area of the display area superimposed on the play screen of the game. This point will be described with reference to FIG. 10. FIG. 10 is a diagram (3) illustrating a variation of the display control processing according to the embodiment.

In the example illustrated in FIG. 10, the proposal apparatus 100 displays a display area 240 that has a smaller area and includes fewer items of help content to be proposed than those illustrated in FIG. 8 or 9. In this case, the user 10 can view the game screen more widely, and thus, even in a non-busy scene of the game, the user 10 can continue the game without the view being blocked by the display area 240. The proposal apparatus 100 may change the order of the help content items to be displayed superimposed on the play screen of the game from among the plurality of help content items according to the degree of urgency, to display only the help content items more suitable for the user 10.

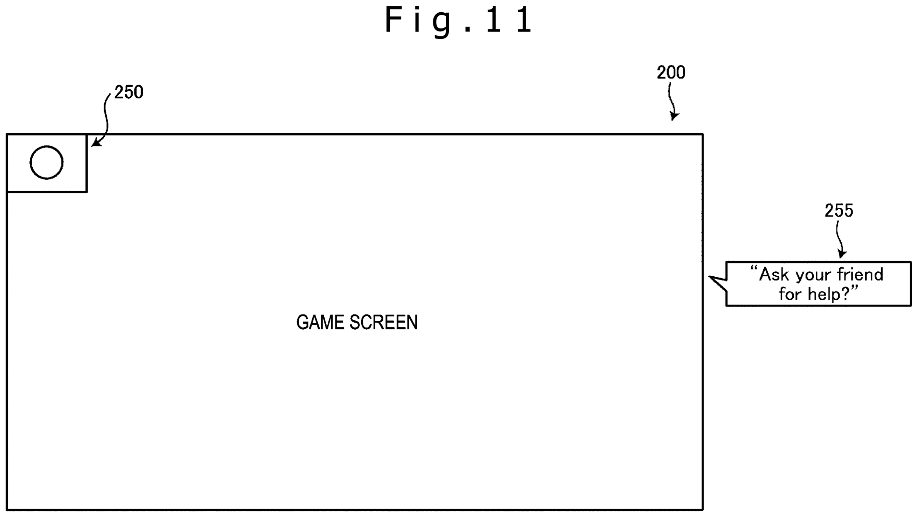

Furthermore, the proposal apparatus 100 may propose help content to the user 10 by a different expression method. For example, the proposal apparatus 100 may propose the contents of the help content to be proposed to the user 10 by voice in accordance with the degree of urgency. This point will be described with reference to FIG. 11. FIG. 11 is a diagram (4) illustrating a variation of the display control processing according to the embodiment.

In the example illustrated in FIG. 11, the proposal apparatus 100 does not display specific information of the help content and displays only a notification 250 indicating that help content has been proposed on the game screen in a superimposed manner. Then, the proposal apparatus 100 outputs a voice message 255 to communicate the contents of the help content to be proposed to the user 10. In this case, the user 10 inputs to the system, for example, a voice message indicating that the proposal of the help content is accepted. Accordingly, even when the user 10 is playing a scene with a feeling of tension, the user 10 can check the contents of the help content or cause the system to execute the contents of the help content.

1-5. Modification Example

1-5-1. Apparatus Configuration

The proposal apparatus 100 according to the embodiment is merely a conceptual illustration of functions and may take various forms depending on the embodiment. For example, the proposal apparatus 100 may be configured to include two or more apparatuses that are different in terms of the above-described functions. As an example, the proposal apparatus 100 may be configured to include a cloud server and an edge terminal (a smart speaker, a smartphone, or the like) connected via a network. In this case, when the edge terminal acquires a voice command from the user 10, the edge terminal transmits the acquired information to the cloud server. Then, the cloud server executes the processing as illustrated in FIG. 1 and the like and performs control to display the contents of the help content to be proposed to the user 10 on the edge terminal.

1-5-2. Input to System

In the embodiment described above, an example in which the proposal apparatus 100 receives a certain voice input from the user 10 has been described. Here, the input from the user 10 is not necessarily limited to voice and is any input, such as a key operation or a gesture, of information to the system. The input target is not limited to the command for requesting help content and may be any command.

1-5-3. Aspects of System

In the embodiment described above, an example in which the system that proposes a voice command or the like is an operating system has been described. However, the system is not limited to an operating system. For example, the system may be various types of applications or the like. That is, in a case where the application functions as an information processing system that executes search processing in the application or processing to run a game or the like held in the application, the proposal processing according to the embodiment may be applied to the system such as the application. In addition, the screen on which the proposal is displayed in the system is not limited to a game screen or the like and is any user interface.

1-5-4. Aspect of Solution (Help Content) Proposal

In the embodiment described above, an example in which the proposal apparatus 100 proposes help content requested when the user 10 is playing a game has been described. Here, the content for which the help content is proposed is not necessarily limited to the genre of games and need not be limited to a game as long as the content causes some interactive exchange with the user, for example.

For example, in a case where the user 10 is driving a vehicle and a system is present inside the vehicle, the proposal apparatus 100 may execute processing to propose a destination in accordance with the degree of urgency of the user 10. Specifically, in a case where the request "find a convenience store" is received from the user 10, the proposal apparatus 100 calculates the degree of urgency of the user 10 from the acoustic parameters or the like of the speech of the user 10. Then, if the degree of urgency of the user 10 is relatively high, the proposal apparatus 100 proposes that the user 10 goes to a convenience store that is away from the original route but is located at the shortest distance. On the other hand, when the degree of urgency of the user 10 is relatively low, the proposal apparatus 100 selects the nearest convenience store on the original route and proposes going to the selected convenience store.

In addition, in a case where the user 10 uses a device having a voice assistant function to use a transfer guidance of a transportation system, the proposal apparatus 100, which is the device, may execute processing to propose how to transfer in accordance with the degree of urgency of the user 10. Specifically, in a case where the request "tell me how to get to XXX" is received from the user 10, the proposal apparatus 100 calculates the degree of urgency of the user 10 from the acoustic parameters or the like of the speech of the user 10. Then, if the degree of urgency of the user 10 is relatively high, the proposal apparatus 100 proposes how to transfer so as to allow the user 10 to arrive at the destination to quickest. On the other hand, if the degree of urgency of the user 10 is relatively low, the proposal apparatus 100 listens to other requests such as the cost and arrival time from the user 10 and proposes how to transfer in accordance with the request of the user 10.

In addition, in a case where the user 10 is examining a cooking recipe by using a device having a voice assistant function, the proposal apparatus 100, which is the device, may execute processing to propose a recipe according to the degree of urgency of the user 10. Specifically, in a case where the request "do you know a recipe for breakfast?" is received from the user 10, the proposal apparatus 100 calculates the degree of urgency of the user 10 from the acoustic parameters or the like of the speech of the user 10. Then, if the degree of urgency of the user 10 is relatively high, the proposal apparatus 100 proposes a recipe with the shortest required time for cooking. On the other hand, if the degree of urgency of the user 10 is relatively low, the proposal apparatus 100 proposes a recipe in which a condition other than the required time is prioritized while interposing with an interaction including listening to what dish the user 10 desires.

2. Other Embodiments

The processing according to each of the above-described embodiments may be executed in various different forms other than the above-described embodiments.

In addition, among the processing described in the above-described embodiments, all or some of the processing described as being automatically executed may be manually executed, or all or some of the processing described as being manually executed may be automatically executed by a known method. In addition, the processing procedures, specific names, and information including various types of data and parameters described in the above document and drawings can be discretionarily changed unless otherwise specified. For example, the various types of information illustrated in the drawings are not limited to the illustrated information.

The component elements of the apparatuses illustrated in the drawings are functional concepts and are not necessarily physically configured as illustrated in the drawings. That is, the specific forms of distribution and integration of the respective apparatuses are not limited to those illustrated in the drawings, and all or some of the apparatuses may be configured to be functionally or physically distributed or integrated in any unit according to various loads, usage conditions, and the like. For example, the calculation section 134 and the determination section 135 may be integrated together.

The embodiments and the modification examples described above can be combined as appropriate as long as the processing contents do not contradict each other.

In addition, the effects described in the present specification are merely examples and are not limited, and other effects may be obtained.

3. Effects of Proposal Apparatus according to Present Disclosure

As described above, a proposal apparatus (the proposal apparatus 100 in the embodiment) according to the present disclosure includes a reception section (the reception section 131 in the embodiment) and a proposal section (the proposal section 132 in the embodiment). The reception section receives a request input by a user to the information processing system. When the request is received, the proposal section calculates a degree of urgency of the user based on the use situation of the user in the information processing system and selects and proposes a solution to be presented to the user from among a plurality of solutions related to the request according to the calculated degree of urgency.

In this manner, the proposal apparatus according to the present disclosure makes a proposal to the user after selecting a solution in accordance with the use situation of the user and thus can appropriately present a response in accordance with the user situation.

Also, the proposal section calculates the degree of urgency based on a comparison between the voice when the user inputs the request and the normal voice of the user.

In this manner, the proposal apparatus calculates the degree of urgency in accordance with the parameters of the voice input of the user, and thus it is possible to determine the degree of urgency of the user without requiring the user to take time and effort to perform an input or the like particularly in a deliberate manner.

The reception section receives a request for game content that runs on the information processing system. The proposal section proposes a way to solve the game content to the user as a solution.

In this manner, the proposal apparatus can quickly and appropriately present a solution to a user relating to using the game content or the like that requires immediacy for a solution.

The proposal section proposes, to the user, any of contact with a friend of the user in the game content, posting of content related to the request to a network, and help content associated with the game content from among the solutions in accordance with the degree of urgency. For example, the proposal section proposes to the user one of inviting a friend to the game content and sending a message to the friend in accordance with the state of the friend of the user. In addition, in a case where the user has already viewed the help content associated with the game content within a certain period of time at the time when the proposal section proposes the solution, the proposal section may propose a solution other than the help content to the user.

In this manner, the proposal apparatus determines whether a quick solution is required or presentation of comprehensive information is required in accordance with the use situation of the user and then presents a solution to the user. Accordingly, a solution more in line with the situation can be proposed to the user.

The proposal section calculates the degree of urgency based on the operation information in the game content being played by the user when the user inputs the request. The proposal section may calculate the degree of urgency based on setting information set in advance for each scene in the game content in the game content being played by the user when the user inputs the request.

In this manner, the proposal apparatus calculates the degree of urgency based on not only the voice of the user but also the situation of the gameplay and the information set in the game and thus can determine the situation of the user from a wider variety of viewpoints.

The proposal section adjusts the number of solutions to be displayed superimposed on the play screen of the game content from among the plurality of solutions and the display area for displaying the proposed solutions according to the degree of urgency. For example, if the degree of urgency is greater than a predetermined value, the proposal section reduces the number of solutions to be displayed superimposed on the play screen of the game content from among the plurality of solutions. Alternatively, if the degree of urgency is greater than a predetermined value, the proposal section may reduce the area of the display area superimposed on the play screen of the game content. The proposal section may switch the order of the solutions to be displayed superimposed on the play screen of the game content from among the plurality of solutions according to the degree of urgency. The proposal section may propose the contents of the solution to be proposed to the user by voice in accordance with the degree of urgency.

As described above, even when presenting a solution such as help content, the proposal apparatus performs output according to the gameplay situation of the user or the like and thus can propose a solution to the user in a manner that does not hinder the gameplay.

4. Hardware Configuration

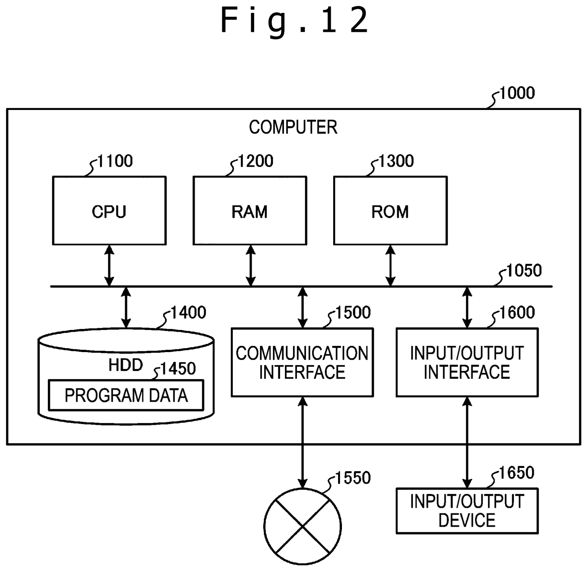

An information device such as the proposal apparatus 100 according to each of the above-described embodiments is implemented by a computer 1000 with a configuration as illustrated in FIG. 12, for example. This will be described below using the proposal apparatus 100 in the example. FIG. 12 is a hardware configuration diagram illustrating an example of the computer 1000 that implements the functions of the proposal apparatus 100. The computer 1000 includes a CPU 1100, a RAM 1200, a read-only memory (ROM) 1300, a hard disk drive (HDD) 1400, a communication interface 1500, and an input/output interface 1600. The sections of the computer 1000 are connected to each other via a bus 1050.

The CPU 1100 operates based on a program stored in the ROM 1300 or the HDD 1400 and controls each section. For example, the CPU 1100 loads programs stored in the ROM 1300 or the HDD 1400 onto the RAM 1200 and executes processing corresponding to the various programs.

The ROM 1300 stores a boot program such as a basic input output system (BIOS) executed by the CPU 1100 when starting up the computer 1000, programs depending on hardware of the computer 1000, and the like.

The HDD 1400 is a computer-readable recording medium that non-temporarily records programs executed by the CPU 1100 and data and the like used by the programs. In particular, the HDD 1400 is a recording medium that records the proposal program according to the present disclosure, which is an example of program data 1450.

The communication interface 1500 is an interface for the computer 1000 to connect to an external network 1550 (for example, the Internet). For example, the CPU 1100 receives data from another device via the communication interface 1500 and transmits data generated by the CPU 1100 to another device via the communication interface 1500.

The input/output interface 1600 is an interface for connecting an I/O device 1650 and the computer 1000. For example, the CPU 1100 receives data from an input device such as a keyboard and a mouse via the input/output interface 1600. The CPU 1100 also transmits data to an output device such as a display, a speaker, a printer, and the like via the input/output interface 1600. The input/output interface 1600 may function as a media interface that reads a program or the like stored on a predetermined recording medium (media). The media is, for example, an optical storage medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the proposal apparatus 100 according to the embodiment, the CPU 1100 of the computer 1000 executes the proposal program loaded on the RAM 1200 to implement the functions of the control section 130 and the like. The HDD 1400 stores the proposal program according to the present disclosure and the data in the storage section 120. Note that the CPU 1100 reads the program data 1450 from the HDD 1400 and executes the program data, but in another example, the CPU 1100 may acquire these programs from another device via the external network 1550.

Note that the present technology can also have the following configurations.

(1) A proposal apparatus including:

a reception section configured to receive a request input by a user to an information processing system; and a proposal section configured to, when the request is received, calculate a degree of urgency of the user based on a use situation of the user in the information processing system and select and propose a solution to be presented to the user from among a plurality of solutions related to the request according to the calculated degree of urgency.

(2) The proposal apparatus according to (1), wherein
the proposal section calculates the degree of urgency based on a comparison between a voice when the user inputs the request and a normal voice of the user.
(3) The proposal apparatus according to (2), wherein

the reception section receives the request for game content running on the information processing system, and the proposal section proposes to the user a way to solve the game content as the solution.

(4) The proposal apparatus according to (3), wherein
the proposal section proposes to the user any of contact with a friend of the user in the game content, posting of content related to the request to a network, and help content associated with the game content from among the solutions in accordance with the degree of urgency.
(5) The proposal apparatus according to (4), wherein
the proposal section proposes to the user one of inviting a friend of the user to the game content and sending a message to the friend in accordance with a state of the friend.
(6) The proposal apparatus according to (4) or (5), wherein
in a case where the user has already viewed help content associated with the game content within a certain period of time at a time when a solution is proposed, the proposal section proposes a solution other than the help content to the user.
(7) The proposal apparatus according to any one of (3) to (6), wherein
the proposal section calculates the degree of urgency based on operation information in the game content being played by the user when the user inputs a request.
(8) The proposal apparatus according to any one of (3) to (7), wherein
the proposal section calculates the degree of urgency based on setting information set in advance for each scene in the game content in the game content being played by the user when the user inputs a request.
(9) The proposal apparatus according to (7) or (8), wherein
the proposal section adjusts the number of solutions to be displayed superimposed on a play screen of the game content from among the plurality of solutions and a display area for displaying the solution to be proposed according to the degree of urgency.
(10) The proposal apparatus according to (9), wherein
if the degree of urgency is greater than a predetermined value, the proposal section reduces the number of solutions to be displayed superimposed on a play screen of the game content from among the plurality of solutions.
(11) The proposal apparatus according to (9) or (10), wherein
if the degree of urgency is greater than a predetermined value, the proposal section reduces an area of the display area superimposed on a play screen of the game content.
(12) The proposal apparatus according to any one of (9) to (11), wherein
the proposal section switches an order of solutions to be displayed superimposed on a play screen of the game content from among the plurality of solutions in accordance with the degree of urgency.
(13) The proposal apparatus according to any one of (9) to (12), wherein
the proposal section proposes contents of the solution to be proposed to the user by voice in accordance with the degree of urgency.
(14) A proposal method comprising:

receiving, by a computer, a request input by a user to an information processing system; and by the computer, when the request is received, calculating a degree of urgency of the user based on a use

13

situation of the user in the information processing system and selecting and proposing a solution to be presented to the user from among a plurality of solutions related to the request according to the calculated degree of urgency.

(15) A proposal program that causes a computer to function as a proposal apparatus, the proposal apparatus including:

a reception section configured to receive a request input by a user to an information processing system; and a proposal section configured to, when the request is received, calculate a degree of urgency of the user based on a use situation of the user in the information processing system and select and propose a solution to be presented to the user from among a plurality of solutions related to the request according to the calculated degree of urgency.

Reference Signs List

10  User
20  Controller
100  Proposal apparatus
110  Communication section
120  Storage section
121  Speech information storage section
122  User information storage section
123  Proposal information storage section
130  Control section
131  Reception section
132  Proposal section
133  Acquisition section
134  Calculation section
135  Determination section
136  Output control section

**Claims**

1. A proposal apparatus comprising:

   a reception section configured to receive a request input by a user to an information processing system; and a proposal section configured to, when the request is received, calculate a degree of urgency of the user based on a use situation of the user in the information processing system and select and propose a solution to be presented to the user from among a plurality of solutions related to the request according to the calculated degree of urgency.

2. The proposal apparatus according to claim 1, wherein
   the proposal section calculates the degree of urgency based on a comparison between a voice when the user inputs the request and a normal voice of the user.

3. The proposal apparatus according to claim 2, wherein

   the reception section receives the request for game content running on the information processing system, and the proposal section proposes to the user a way to solve the game content as the solution.

4. The proposal apparatus according to claim 3, wherein
   the proposal section proposes to the user any of contact with a friend of the user in the game content, posting of content related to the request to a network, and help content associated with the game content from among the solutions in accordance with the degree of urgency.

5. The proposal apparatus according to claim 4, wherein
   the proposal section proposes to the user one of inviting a friend of the user to the game content and sending a message to the friend in accordance with a state of the friend.

6. The proposal apparatus according to claim 4, wherein
in a case where the user has already viewed help content associated with the game content within a certain period of time at a time when a solution is proposed, the proposal section proposes a solution other than the help content to the user.

7. The proposal apparatus according to claim 3, wherein
the proposal section calculates the degree of urgency based on operation information in the game content being played by the user when the user inputs a request.

8. The proposal apparatus according to claim 3, wherein
the proposal section calculates the degree of urgency based on setting information set in advance for each scene in the game content in the game content being played by the user when the user inputs a request.

9. The proposal apparatus according to claim 7, wherein
the proposal section adjusts the number of solutions to be displayed superimposed on a play screen of the game content from among the plurality of solutions and a display area for displaying the solution to be proposed according to the degree of urgency.

10. The proposal apparatus according to claim 9, wherein
if the degree of urgency is greater than a predetermined value, the proposal section reduces the number of solutions to be displayed superimposed on a play screen of the game content from among the plurality of solutions.

11. The proposal apparatus according to claim 9, wherein
if the degree of urgency is greater than a predetermined value, the proposal section reduces an area of the display area superimposed on a play screen of the game content.

12. The proposal apparatus according to claim 9, wherein
the proposal section switches an order of solutions to be displayed superimposed on a play screen of the game content from among the plurality of solutions in accordance with the degree of urgency.

13. The proposal apparatus according to claim 9, wherein
the proposal section proposes contents of the solution to be proposed to the user by voice in accordance with the degree of urgency.

14. A proposal method comprising:

receiving, by a computer, a request input by a user to an information processing system; and
by the computer, when the request is received, calculating a degree of urgency of the user based on a use situation of the user in the information processing system and selecting and proposing a solution to be presented to the user from among a plurality of solutions related to the request according to the calculated degree of urgency.

15. A proposal program that causes a computer to function as a proposal apparatus, the proposal apparatus comprising:

a reception section configured to receive a request input by a user to an information processing system; and
a proposal section configured to, when the request is received, calculate a degree of urgency of the user based on a use situation of the user in the information processing system and select and propose a solution to be presented to the user from among a plurality of solutions related to the request according to the calculated degree of urgency.

# Fig.1

EP 4 722 862 A1

# Fig. 2

| DEGREE OF URGENCY | HELP CONTENT EXAMPLE | AVAILABILITY |
|---|---|---|
| HIGH | INVITE FRIEND/VOICE CHAT | FRIEND WHO IS ONLINE AND NOT BUSY |
| MEDIUM | MESSAGE TO FRIEND/POST ON SNS | FRIEND IN AN ONLINE STATE |
| LOW | OFFICIAL HELP/WEB SEARCH AND THE LIKE | THERE IS OFFICIAL HELP |

EP 4 722 862 A1

# Fig. 3

PROPOSAL APPARATUS ~100

COMMUNICATION SECTION ~110

CONTROL SECTION ~130
- RECEPTION SECTION ~131
- PROPOSAL SECTION ~132
  - ACQUISITION SECTION ~133
  - CALCULATION SECTION ~134
  - DETERMINATION SECTION ~135
  - OUTPUT CONTROL SECTION ~136

STORAGE SECTION ~120
- SPEECH INFORMATION STORAGE SECTION ~121
- USER INFORMATION STORAGE SECTION ~122
- PROPOSAL CONDITION STORAGE SECTION ~123

N

EP 4 722 862 A1

18

# Fig.4

EP 4 722 862 A1

122

| USER ID | FRIEND LIST | USED SNS | LIST OF OWNED GAMES | ... |
|---------|-------------|----------|---------------------|-----|
| ... | ... | ... | ... | ... |
| A01 | USER A11 | SERVICE B01 | GAME C01 | ... |
| | USER A12 | SERVICE B02 | GAME C02 | ... |
| | ... | ... | ... | ... |
| ... | ... | ... | ... | ... |

# Fig.5

START

↓

S101 RECEIVE VOICE INPUT

↓

S102 IS THERE OFFICIAL HELP CONTENT?

— No → S111 ARE ONLINE FRIENDS PRESENT?

Yes ↓

S103 HAS THE CONTENT ALREADY BEEN REFERRED TO?

— Yes →

No ↓

S104 PROPOSE OFFICIAL HELP CONTENT

S111 ARE ONLINE FRIENDS PRESENT? — No → S121 IS THERE A LINKED SNS?

Yes ↓

S112 IS THE FRIEND IN A STATE OF BEING ABLE TO RESPOND? — No →

Yes ↓

S113 IS A MULTIPLAYER GAME PLAYED? — No →

Yes ↓

S114 INVITE FRIEND TO GAME

S121 IS THERE A LINKED SNS? — No →

Yes ↓

S122 PROPOSE POSTING TO SNS

S123 PROPOSE ALTERNATIVES SUCH AS A WEB SEARCH

S116 PROPOSE SENDING A MESSAGE TO A FRIEND

S115 PROPOSE A VOICE CHAT WITH A FRIEND

EP 4 722 862 A1

# Fig.6

```
                    ┌──────────────┐
                    │    START     │
                    └──────┬───────┘
                           │        ⌇S201
                    ┌──────▼───────────┐
                    │ RECEIVE VOICE INPUT │
                    └──────┬───────────┘
                           │        ⌇S202
                    ┌──────▼───────────┐
                    │ CALCULATE DEGREE OF │
                    │     URGENCY       │
                    └──────┬───────────┘
                           │        ⌇S203
              LOW    ◇──────▼──────◇    HIGH
          ┌─────────── WHAT LEVEL IS ───────────┐
          │          THE DEGREE OF              │
          │            URGENCY?                 │
          │                │                    │
          │             MEDIUM                  │
          │                │                    │
     ⌇S204 │          ⌇S205 │              ⌇S206 │
   ┌────────▼───────┐ ┌──────▼─────────┐ ┌───────▼────────┐
   │TRANSITION TO S102│ │TRANSITION TO S121│ │TRANSITION TO S111│
   └────────────────┘ └────────────────┘ └────────────────┘
```

# Fig.7

EP 4 722 862 A1

# Fig.8

○ **How about 1ˢᵗ one?** — 215, 210

200

1. [ ] Offical Help

2. [ ] Friend Help

3. [ ] Social Media

4. [ ] Web Search

GAME SCREEN

220

"How about 1ˢᵗ one?"

# Fig.9

# Fig.10

Fig.11

# Fig.12

## INTERNATIONAL SEARCH REPORT

International application No.

**PCT/JP2024/016625**

### A. CLASSIFICATION OF SUBJECT MATTER

*G06F 3/01*(2006.01)i; *A63F 13/53*(2014.01)i; *A63F 13/79*(2014.01)i; *A63F 13/85*(2014.01)i; *A63F 13/215*(2014.01)i; *G06F 3/16*(2006.01)i

FI:   G06F3/01 510; G06F3/16 630; G06F3/16 620; A63F13/79; A63F13/215; A63F13/85; A63F13/79 500; A63F13/53

According to International Patent Classification (IPC) or to both national classification and IPC

### B. FIELDS SEARCHED

Minimum documentation searched (classification system followed by classification symbols)

G06F3/01; A63F13/53; A63F13/79; A63F13/85; A63F13/215; G06F3/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-115769 A (NTT DOCOMO, INC.) 26 June 2014 (2014-06-26) paragraphs [0029]-[0049], fig. 1, fig. 5-7 | 1, 14-15 |
| Y | paragraphs [0029]-[0049], fig. 1, fig. 5-7 | 1-5, 7, 14-15 |
| A | entire text, all drawings | 6, 8-13 |
| Y | US 2021/0049996 A1 (LG ELECTRONICS INC.) 18 February 2021 (2021-02-18) paragraphs [0185]-[0193], fig. 6-7 | 1-5, 7, 14-15 |
| A | entire text, all drawings | 6, 8-13 |
| Y | JP 2021-518197 A (SONY INTERACTIVE ENTERTAINMENT LLC) 02 August 2021 (2021-08-02) paragraphs [0012], [0086]-[0122], [0163], fig. 1A, 3C-3E, 13A-13B | 1-5, 7, 14-15 |
| A | entire text, all drawings | 6, 8-13 |
| A | JP 2022-112560 A (NEC CORPORATION) 03 August 2022 (2022-08-03) entire text, all drawings | 1-15 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/016625**

| C. | DOCUMENTS CONSIDERED TO BE RELEVANT | |
|---|---|---|
| Category* | Citation of document, with indication, where appropriate, of the relevant passages | Relevant to claim No. |
| A | JP 2019-098064 A (SEGA GAMES CO., LTD.) 24 June 2019 (2019-06-24)<br>entire text, all drawings | 1-15 |

Form PCT/ISA/210 (second sheet) (July 2022)

**INTERNATIONAL SEARCH REPORT**
**Information on patent family members**

International application No.

**PCT/JP2024/016625**

| Patent document cited in search report | | | Publication date (day/month/year) | Patent family member(s) | Publication date (day/month/year) |
|---|---|---|---|---|---|
| JP | 2014-115769 | A | 26 June 2014 | (Family: none) | |
| US | 2021/0049996 | A1 | 18 February 2021 | KR 10-2021-0020656 A | |
| JP | 2021-518197 | A | 02 August 2021 | WO 2019/183343 A1 paragraphs [0039], [0113]-[0149], [0190], fig. 1A, 3C-3E, 13A-13B | |
| JP | 2022-112560 | A | 03 August 2022 | (Family: none) | |
| JP | 2019-098064 | A | 24 June 2019 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202086943 A